# EUROPEAN PATENT SPECIFICATION

(11) **EP 4 414 595 B1**
(45) Date of publication and mention of the grant of the patent: **25.11.2026**
(21) Application number: 23177783.0
(22) Date of filing: 06.06.2023
(51) Int. Cl.: F16L 55/18, B23D 45/16, B26D 3/16

(54) **SERVICE TOOL FOR CUTTING AND PLUGGING A UTILITY SERVICE LINE**
SERVICEWERKZEUG ZUM SCHNEIDEN UND EINSTECKEN EINER SERVICELEITUNG
OUTIL DE SERVICE POUR COUPER ET BOUCHER UNE LIGNE DE SERVICE UTILITAIRE

(30) Priority: 09.02.2023 US 202318166505
(43) Date of publication of application: 14.08.2024
(73) Proprietor: Niezgoda Engineering, LLC, Brewster, MA 02631 (US)
(72) Inventor: Niezgoda, Brian, Brewster, MA 02631 (US); Niezgoda, Dean, Brewster, MA 02631 (US)
(74) Representative: Rutz, Andrea

(56) References cited:
- US-A- 6 014 810
- US-A1- 2009 307 910
- US-B1- 9 784 062

## Description

### BACKGROUND

### Technical Field

The present disclosure relates to a service tool for servicing a utility service line. More specifically, the present disclosure relates to a service tool for cutting and plugging a utility service line.

### Technical Considerations

Utility service lines, such as water supply lines, require periodic servicing or repair that require an upstream portion of the utility service line to be isolated from a downstream utility service line so that service or repair can be made. Typically, water is turned off at a point upstream of the location where service or repair is necessary to allow the utility service line to be cut. This results in an inconvenience until the service or repair is completed.

US 9 784 062 B1 discloses a device for cutting and plugging underwater pipes. The device includes a frame with one or more clamps for securing the device to the pipe. Attached to the frame is an arm having a first end and a second end. The first end is attached to an actuation element that, in combination with a support bar, can pivot and extend the arm. A motor is attached to the second end of the arm. A saw blade and pipe plug are concentrically mounted to the motor. The motor powers the saw blade to cut the pipe transversely. The arm then positions the pipe plug concentric with the cut pipe, and, in combination with rotation of the motor, plugs the cut pipe with the pipe plug. There exists a need in the art for a service tool for servicing a utility service line without the need for turning off the upstream water supply.

### SUMMARY

In some non-limiting embodiments or aspects, provided is a service tool for cutting and plugging a utility service line. The service tool may include a body having a receiving portion configured to receive the utility service line; a clamping mechanism movable relative to the body and configured to clamp around at least a portion of an outer circumference of the utility service line when the utility service line is received in the receiving portion; a cutting blade disposed in the receiving portion and configured to engage the outer circumference of the utility service line and cut the utility service line into a first cut portion and a second cut portion as the cutting blade is rotated about a cutting axis relative to the body; and a hub associated with the body. The hub may include a plugging mechanism configured to displace the first cut portion of the utility service line and dispense a plug into the second cut portion of the utility service line.

In some non-limiting embodiments or aspects, the clamping mechanism may include at least one jaw movable relative to the body between an open position and a closed position. In the closed position, the at least one jaw may be configured to clamp around at least the portion of the outer circumference of the utility service line. The clamping mechanism may include a threaded drive for moving the at least one jaw relative to the body between the open position and the closed position. A handle may be connected to the body, such that the handle extends in a direction substantially perpendicular to a longitudinal axis of the receiving portion.

In some non-limiting embodiments or aspects, the hub may be connected to the body via a rotatable shaft such that the hub is rotatable relative to the body with rotation of the shaft. The rotatable shaft may include an input drive configured for connecting to a tool for rotating the rotatable shaft. The input drive may be a keyed hole configured for receiving a corresponding protrusion on the tool.

In some non-limiting embodiments or aspects, the plugging mechanism may include a plug chamber offset from the shaft, the plug chamber configured to receive the plug. The hub may be configured to contact the utility service line as the cutting blade is rotated about the cutting axis relative to the body to displace the first cut portion of the utility service line such that the plug chamber is aligned with the second cut portion of the utility service line.

In some non-limiting embodiments or aspects, the plug is disposed in the plug chamber of the plugging mechanism. The plug may be threadably received within the plug chamber.

In some non-limiting embodiments or aspects, the plug may include an inner portion having a plug end with a seal configured for engaging an inner sidewall of the second cut portion of the utility service line and an outer portion threadably connected to a shaft of the inner portion protruding from the plug end. The outer portion may have first threads on an interior thereof configured for threadably connecting to the shaft of the portion and second threads on an exterior thereof for threadably connecting to the plug chamber of the plug mechanism.

**In** some non-limiting embodiments or aspects, a service tool for cutting and plugging a utility service line may include a body having a receiving portion configured to receive the utility service line; a clamping mechanism movable relative to the body and configured to clamp around at least a portion of an outer circumference of the utility service line when the utility service line is received in the receiving portion; a cutting blade disposed in the receiving portion and configured to engage the outer circumference of the utility service line and cut the utility service line into a first cut portion and a second cut portion as the cutting blade is rotated about a cutting axis relative to the body; a hub associated with the body, the hub comprising a plugging mechanism; and a plug received in the plugging mechanism and configured to be dispensed into the second cut portion of the utility service line. The hub may be configured to contact the utility service line as the body is rotated about the utility service line to displace the first cut portion of the utility service line such that the plugging mechanism is aligned with the second cut portion of the utility service line.

In some non-limiting embodiments or aspects, the hub may be connected to the body via a rotatable shaft such that the hub is rotatable relative to the body with rotation of the shaft. The rotatable shaft may include an input drive configured for connecting to a tool for rotating the rotatable shaft.

**In** some non-limiting embodiments or aspects, the plugging mechanism may include a plug chamber offset from the shaft, the plug chamber configured to receive the plug. The plug may include an inner portion having a plug end with a seal configured for engaging an inner sidewall of the second cut portion of the utility service line and an outer portion threadably connected to a shaft of the inner portion protruding from the plug end. The outer portion may have first threads on an interior thereof configured for threadably connecting to the shaft of the inner portion and second threads on an exterior thereof for threadably connecting to the plug chamber of the plug mechanism.

### BRIEF DESCRIPTION OF THE DRAWINGS

Additional advantages and details are explained in greater detail below with reference to the exemplary embodiments that are illustrated in the accompanying figures, in which:
FIG. 1 is a right side view of a service tool for cutting and plugging a utility service line in accordance with one embodiment or aspect of the present disclosure;
FIG. 2 is a left side view of the service tool shown in FIG. 1;
FIG. 3 is an exploded perspective view of the service tool shown in FIG. 1;
FIG. 4 is a side view of a cutting blade for use with the service tool shown in FIG. 1;
FIG. 5 is a cross-sectional view of the service tool shown in FIG. 1 taken along line A-A;
FIG. 6 is a perspective view of the service tool of FIG. 1 showing an installation of a plug;
FIG. 7 is a left side view of the service tool of FIG. 1 with jaws of the service tool shown in an open position;
FIG. 8 is a left-side perspective view of the service tool of FIG. 1 shown on a utility line;
FIG. 9 is a right-side perspective view of the service tool of FIG. 1 shown in a start of cut position on a utility line;
FIGS. 10-13 are side cross-sectional views of the service tool of FIG. 1 showing the position of the cutting blade at various positions relative to a utility line;
FIG. 14 is a right-side perspective view of the service tool of FIG. 1 showing a cut utility line and a plug in an uninstalled position;
FIG. 15 is a right-side perspective view of the service tool of FIG. 1 showing a cut utility line and a plug in an installed position;
FIG. 16 is a right-side perspective view of the service tool of FIG. 1 showing a cut and plugged utility line;
FIG. 17 is a side view of a plug configured for use with the service tool of FIG. 1; and
FIG. 18 is a side cross-sectional view of the plug shown in FIG. 17 taken along line B-B.

### DETAILED DESCRIPTION

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects. Hence, specific dimensions and other physical characteristics related to the embodiments or aspects disclosed herein are not to be considered as limiting.

For purposes of the description hereinafter, the terms "end," "upper," "lower," "right," "left," "vertical," "horizontal," "top," "bottom," "lateral," "longitudinal," and derivatives thereof shall relate to embodiments or aspects as they are oriented in the drawing figures. However, it is to be understood that embodiments or aspects may assume various alternative variations and step sequences, except where expressly specified to the contrary. It is also to be understood that the specific devices and processes illustrated in the attached drawings, and described in the following specification, are simply non-limiting exemplary embodiments or aspects. Hence, specific dimensions and other physical characteristics related to the embodiments or aspects of the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items, and may be used interchangeably with "one or more" and "at least one." As used in the specification and the claims, the singular form of "a," "an," and "the" include plural referents, such as unless the context clearly dictates otherwise. Additionally, Furthermore, as used herein, the terms "set" and "group" are intended to include one or more items (e.g., related items, unrelated items, a combination of related and unrelated items, etc.) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a controller, a processor, a computing device, etc.) as appropriately referred to herein.

All numbers used in the specification and claims are to be understood as being modified in all instances by the term "about". The terms "approximately", "about", and "substantially" mean a range of plus or minus ten percent of the stated value.

**As** used herein, the term "at least one of" is synonymous with "one or more of". For example, the phrase "at least one of A, B, and C" means any one of A, B, and C, or any combination of any two or more of A, B, and C. For example, "at least one of A, B, and C" includes one or more of A alone; or one or more of B alone; or one or more of C alone; or one or more of A and one or more of B; or one or more of A and one or more of C; or one or more of B and one or more of C; or one or more of all of A, B, and C. Similarly, as used herein, the term "at least two of" is synonymous with "two or more of". For example, the phrase "at least two of D, E, and F" means any combination of any two or more of D, E, and F. For example, "at least two of D, E, and F" includes one or more of D and one or more of E; or one or more of D and one or more of F; or one or more of E and one or more of F; or one or more of all of D, E, and F.

Some non-limiting embodiments or aspects may be described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

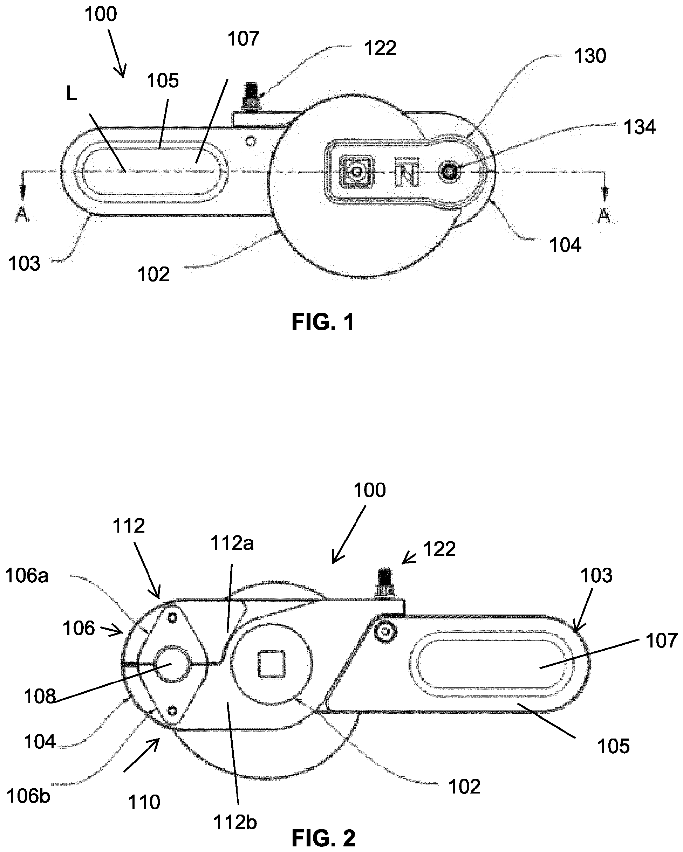

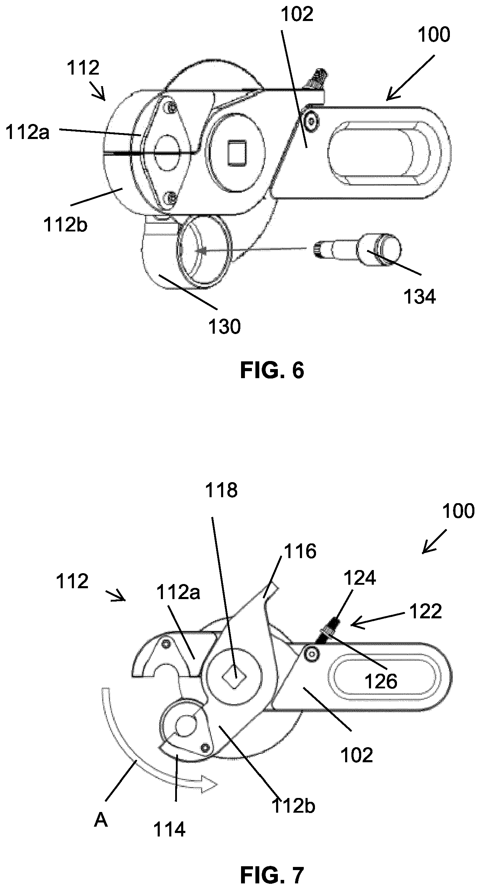

With reference to FIGS. 1-2, a tool 100 (hereinafter referred to as "tool 100") for cutting and plugging a utility service line 200 (shown in FIG. 6) is shown in accordance with some non-limiting embodiments or aspects of the present disclosure. The utility service line 200 may be a water, gas, or other utility line configured for carrying fluid. The utility service line 200 may be configured for connecting a main line to a residential or commercial building. As described in detail herein, the tool 100 is configured for cutting the utility service line 200 and displacing a first cut portion, such as a downstream portion connected to the residential or commercial building, of the utility service line 200. The tool 100 is further configured to plug the second cut portion, such as an upstream portion connected to the main line. In this manner, the repairs or maintenance can be carried on the utility service line 200 without having to turn off the supply to the main line. In this manner, repairs or maintenance on a single residential or commercial building do not interrupt the water supply of neighboring buildings because the main line can be active during repairs or maintenance.

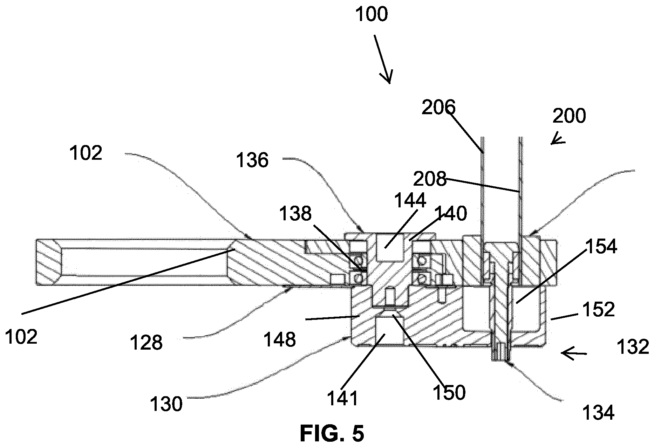

With reference to FIGS. 2, the tool 100 includes a body 102 having a receiving portion 104 configured to receive the utility service line 200 (shown in FIG. 5). In some embodiments or aspects, the receiving portion 104 extends in a direction that is substantially perpendicular to a longitudinal axis L of the service tool (shown in FIG. 1). The receiving portion 104 is sized to receive an outer circumference of the utility service line 200.

With reference to FIGS. 1-2, the body 102 has a handle 103 for holding the tool 100. The handle 103 may be connected to the body 102 or be monolithically formed with the body 102. In some embodiments or aspects, the handle 103 extends in a direction substantially parallel to a longitudinal axis L of the body. The handle 103 may have a holding portion 105 configured for being gripped by the user while using the tool 100. In some embodiments or aspects, an opening 107 may extend through the holding portion 105.

In some embodiments or aspects, and with reference to FIG. 2, the receiving portion 104 may have a sleeve 106 having a central opening 108 configured to receive the utility service line 200. The sleeve 106 is configured to support the utility service line 200 along a portion of the utility service line 200 that is inserted into the tool 100.

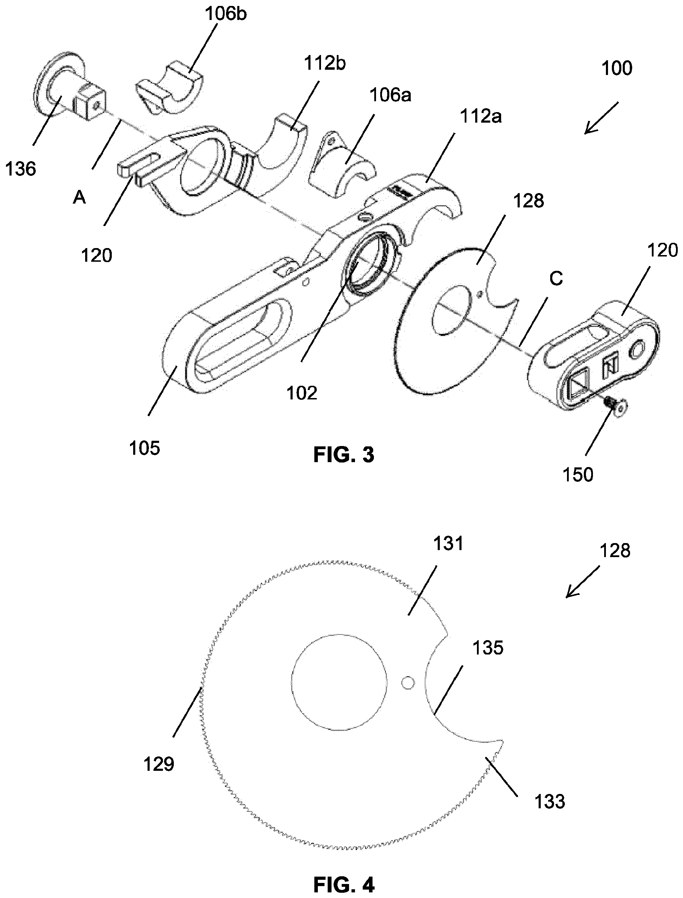

With reference to FIG. 3, the sleeve 106 may be removably connectable to the receiving portion 104. In this manner, a plurality of different sleeves 106 having different-sized central openings 108 can be connected to the receiving portion 104 in order to accommodate different-sized utility service lines 200. For example, a sleeve 106 having a 1" central opening 108 may be connected to the body 102 of the tool 100 to service a utility service line 200 having a 1" outer diameter. If service or maintenance is required on a utility service line 200 having a larger diameter, such as 1.5", 2", or other outer diameter, a sleeve 106 having an appropriately sized central opening 108 may be connected to the body 102.

With reference to FIGS. 2-3, the sleeve 106 may be split into two portions to allow the utility service line 200 to be inserted into the receiving portion 104. For example, the sleeve 106 may have a first sleeve portion 106a associated with a first portion of the body 102 and a second sleeve portion 106b associated with a second portion of the body 102. The first and second sleeve portions 106a, 106b may be movable relative to each other to permit insertion of the utility service line 200 into the central opening 108 of the sleeve 106. The first and second sleeve portion 106a, 106b can be clamped together after the utility service line 200 is inserted into the central opening 108.

With continued reference to FIG. 2, the tool 100 may have a clamping mechanism 110 movable relative to the body 102 and configured to clamp around at least a portion of an outer circumference of the utility service line 200 (shown in FIG. 5) when the utility service line 200 is received in the receiving portion 104, such as the central opening 108 of the sleeve 108. The clamping mechanism 110 has at least one jaw 112 movable relative to the body 102 between an open position (shown in FIG. 7) and a closed position (shown in FIG. 4). In the open position, the clamping mechanism 110 is configured to permit insertion of the tool 100 around the utility service line 200. For example, the at least one jaw 112 may be opened to widen the central opening 108 such that the tool 100 can be fitted around the utility service line 200. In the closed position, the clamping mechanism 110 is secured to be in close physical contact with the outer surface of the portion of the utility service line 200 that is received within the central opening 108. For example, the at least one jaw 112 may be closed to enclose the central opening 108 and clamp around at least the portion of the outer circumference of the utility service line 200.

With reference to FIGS. 6-7, the at least one jaw 112 of the clamping mechanism 110 may be a first fixed jaw 112a and a second movable jaw 112b. The first fixed jaw 112a is fixed relative to the body 102 while the second movable jaw 112b is movable relative to the body 102 and the first fixed jaw 112a in a direction of arrow A. In some embodiments or aspects, the at least one jaw 112 may have a pair of movable jaws (not shown), both of which are movable relative to the body 102 and in opposite directions relative to each other.

With reference to FIG. 7, the second movable jaw 112b has a first end 114 configured for contacting the utility service line 200 and a second end 116 opposite the first end 114. The second movable jaw 112b may be pivotally connected to the body 102 at a first pivot point 118 such that the second movable jaw 112b is pivotable in the direction of arrow A relative to the body 102 and the first fixed jaw 112a about a pivot axis defined by the first pivot point 118.

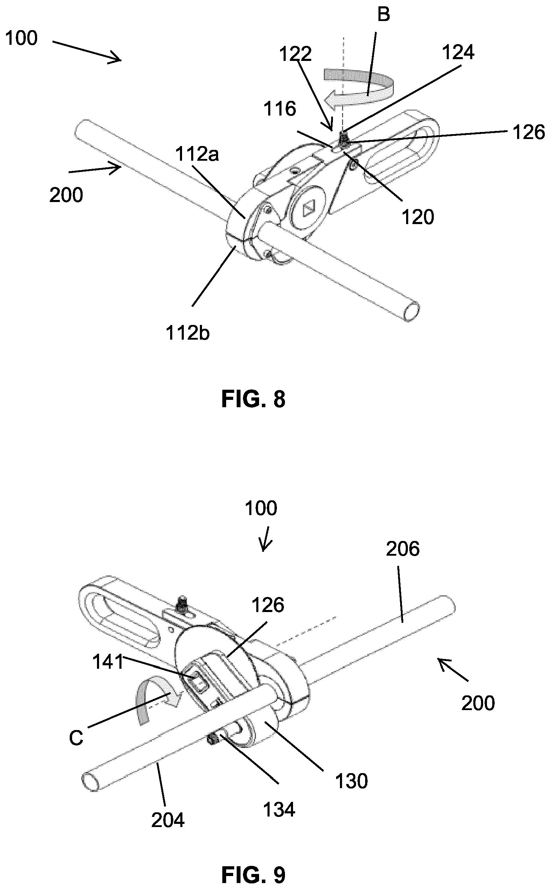

With reference to FIG. 8, the second end 116 of the second movable jaw 112b has a slot 120 configured to engage a clamping device 122. In some embodiments or aspects, the clamping device 122 includes a threaded shaft 124 connected to the body 102. The threaded shaft 124 may be pivotally connected to the body 102 about a second pivot point 126 such that the threaded shaft 124 is pivotally movable relative to the body 102.

In order to secure the second movable jaw 112b relative to the body 102, the threaded shaft 124 is pivoted in a direction away from the second movable jaw 112b such that the second end 116 of the second movable jaw 112b can be moved to the closed position against the body 102 (Fig. 8). Once the second movable jaw 112b is in the closed position, the threaded shaft 124 is pivoted in a reverse direction toward the second movable jaw 112b such that the threaded shaft 124 is received in the slot 120 of the second movable jaw 112b. A nut 126 is provided on the threaded shaft 124 to clamp the second movable jaw 112b in the closed position between the nut 126 and the body 102 of the tool 100. The second movable jaw 112b can be unclamped by releasing the nut 126 and pivoting the threaded shaft 124 out of the slot 120.

With reference to FIGS. 3-4, the tool 100 includes a cutting blade 128 configured to engage an outer surface 202 of the utility service line 200 and cut through the utility service line 200. In some embodiments or aspects, the cutting blade 128 is rotatable relative to the body 102 about a cutting axis C. In order to cut the utility service line 200, the utility service line 200 is clamped in the receiving portion 104 using the clamping mechanism 110 and the cutting blade 128 is rotated about the cutting axis C.

With reference to FIG. 4, the cutting blade 128 has a plurality of cutting teeth 129 extending along at least a portion of an outer perimeter thereof. The cutting teeth 129 are configured to score and cut through the sidewall of the utility service line 200. The cutting blade 128 has an asymmetrical shape relative to the cutting axis C such that the cutting blade 128 is urged closer toward the utility service line 200 as the blade is rotated about the cutting axis C. The cutting blade 128 has a first end 131 that is configured to contact an outer surface of the utility service line 200, a second end 133 that is configured to cut through the utility service line 200 and a plug notch 135 between the first and second ends. The cutting blade 128 is configured to cut the utility service line 200 into a first cut portion 204 and a second cut portion 206 as the cutting blade 128 is rotated about the cutting axis C.

With reference to FIG. 1, the tool 100 has a hub 130 associated with the body 102. The hub 130 is connected to the body 102 via a rotatable shaft 136 such that the hub 130 is rotatable relative to the body 102 with rotation of the rotatable shaft 136. The cutting blade 128 is also operatively connected to the rotatable shaft 136 such that the cutting blade 128 is also rotatable with rotation of the rotatable shaft 136.

With reference to FIG. 5, the hub 130 has a plugging mechanism 132 configured to displace the first cut portion 204 of the utility service line 200 and dispense a plug 134 into the opening of the second cut portion 206. The hub 130 is configured to contact the utility service line 200 as the body 102 of the tool 100 is rotated about the utility service line 200 to displace the first cut portion 204 of the utility service line 200 such that the plug 134 is aligned with the second cut portion 206. The rotatable shaft 136 may be rotatably supported within the body 102 by at least one bearing 138. The rotatable shaft 136 has an input drive 140 configured for connecting to a tool 142 for rotating the rotatable shaft 136. In some embodiments or aspects, the input drive 140 may be a keyed hole 144 configured for receiving a corresponding protrusion 146 on the tool. The rotatable shaft 136 can be rotated about its rotation axis A (shown in FIG. 5) by engaging the keyed hole 144 of the input drive 140 with the protrusion 146 of the tool and rotating the tool. In some embodiments or aspects, the tool may be an impact gun or a wrench. The rotation axis A of the rotatable shaft 136 is coaxial with the cutting axis C of the cutting blade 128.

With continued reference to FIG. 5, the hub 130 has a first end 148 connected to the rotatable shaft 136 by a fastener 150 and a second end 152 offset from the first end 148 and the rotatable shaft 136. The first end 148 may have a second input drive 141 that corresponds to the input drive 140 on the rotatable shaft 136. The second end 152 of the hub 130 may have a plug chamber 154 for receiving the plug 134 (also shown in FIG. 6). The plug chamber 154 may be aligned with the plug notch 135 on the cutting blade 128. In some embodiments or aspects, the plug chamber 154 may be threaded such that the plug 134 can be threadably connected to the second end 152 of the hub 130.

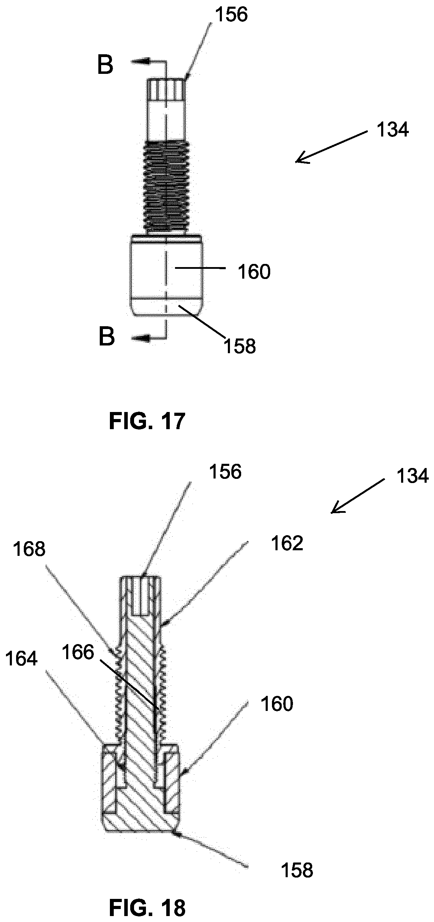

With reference to FIGS. 17 and 18, the plug 134 has an inner portion 156 having a plug end 158 with a seal 160 configured for engaging an inner sidewall 208 of the second cut portion 206 of the utility service line 200 (shown in FIG. 5). The plug 134 further has an outer portion 162 threadably connected to a shaft 164 of the inner portion 156 protruding from the plug end 158. The inner and outer portions 156, 162 are movable relative to each other such that the seal 160 is compressible between them. Compression of the seal 160 causes it to expand in a radially outward direction such that the seal 160 can engage the inner surface of the utility service line 200 to seal the utility service line 200. The outer portion 162 has first threads 166 on an interior thereof configured for threadably connecting to the shaft 164 of the inner portion 156. The outer portion 162 further has second threads 168 on an exterior thereof for threadably connecting to the plug chamber 154 of the hub 130 (shown in FIG. 3).

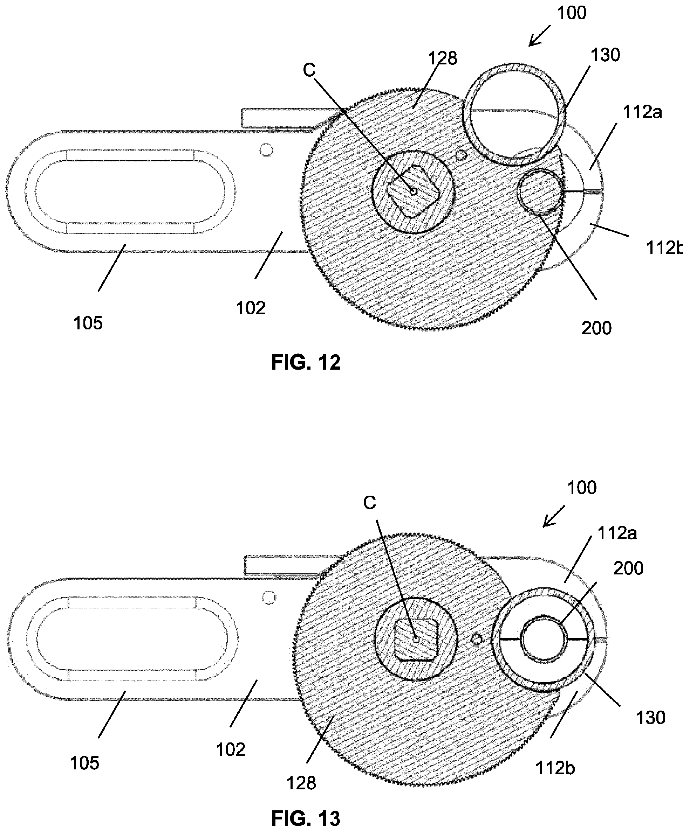

Having described the structure of the tool 100, a method of using the tool 100 to cut and plug the utility service line 200 will now be described with reference to FIGS. 6-16. With reference to FIG. 6, prior to use of the tool 100, the plug 134 is loaded into the plugging mechanism 132 of the hub 130. For example, the plug 134 can be loaded by threadably engaging the second threads 168 on the outer portion of the plug 134 with the threads on the plug chamber 154 of the hub 130.

After loading the plug 134 into the plugging mechanism 132 of the hub 130, the clamping mechanism 110 is moved from the closed position to the open position. With reference to FIG. 7, with the clamping device 122 in an unclamped position, the second movable jaw 112b may be pivotally moved relative to the body 102 and the first jaw 112a in the direction of arrow A about the pivot axis defined by the first pivot point 118. Such movement opens the movable jaws 112a, 112b to permit insertion of the tool 100 around the utility service line 200.

With reference to FIG. 7, when the tool 100 is fitted around the utility service line 200, the second movable jaw 112b may be pivotally moved relative to the body 102 and the first jaw 112a in the direction of arrow B to close the jaws 112a, 112b around the utility service line 200. In order to secure the second movable jaw 112b relative to the body 102, the threaded shaft 124 of the clamping device 122 is pivoted in a direction away from the second movable jaw 112b such that the second end 116 of the second movable jaw 112b can be moved to the closed position against the body 102. Once the second movable jaw 112b is in the closed position, the threaded shaft 124 is pivoted in a reverse direction toward the second movable jaw 112b such that the threaded shaft 124 is received in the slot 120 of the second movable jaw 112b (shown in FIG. 8). The nut 126 on the threaded shaft 124 is tightened by rotating it in a direction of arrow C to clamp the second movable jaw 112b in the closed position between the nut 126 and the body 102 of the tool 100.

With reference to FIG. 9, the cutting blade 128 is rotated about the cutting axis C by engaging the input drive 140 on the rotatable shaft 136 (shown in FIG. 3) or the second input drive 141 on the hub 130 with the tool. Rotation of the cutting blade 128 about the cutting axis C cuts the utility service line 200 due to engagement between the cutting blade 128 and the outer surface of the utility service line 200.

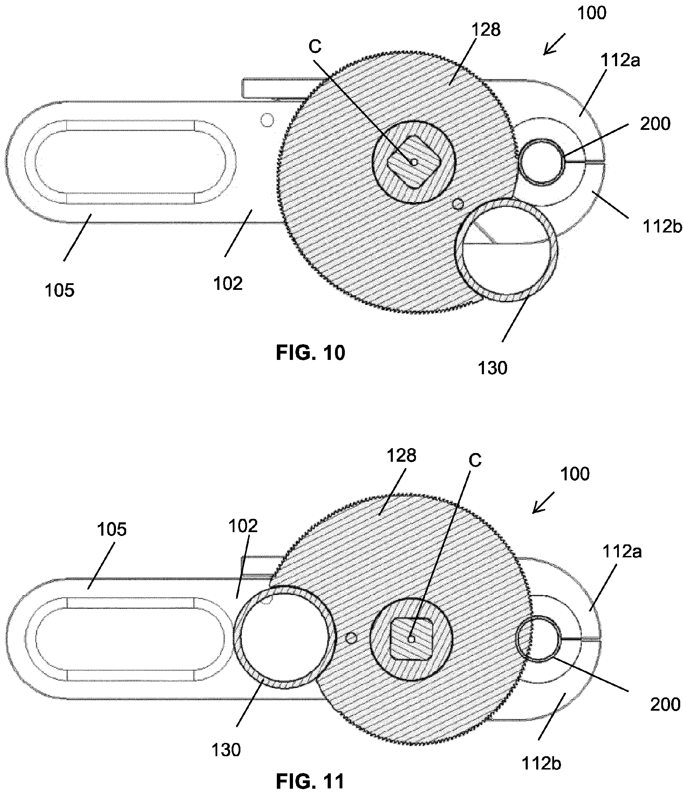

FIGS. 10-13 illustrate various positions of the cutting blade 128 relative to the utility service line 200 as the cutting blade 128 is rotated about the cutting axis C. Initially, as shown in FIG. 10, the cutting blade 128 contacts an outer surface 220 of the sidewall of the utility service line 200. As the cutting blade 128 is rotated about the cutting axis C, the cutting teeth 129 of the cutting blade 128 cut deeper into the utility service line (FIGS. 11-12). As the cutting blade 128 cuts through the sidewall of the utility service line 200, the hub 130 contacts the first cut portion 204 of the utility service line 200 to displace the first cut portion 204 as it is cut from the second cut portion 206 (shown in FIG. 9).

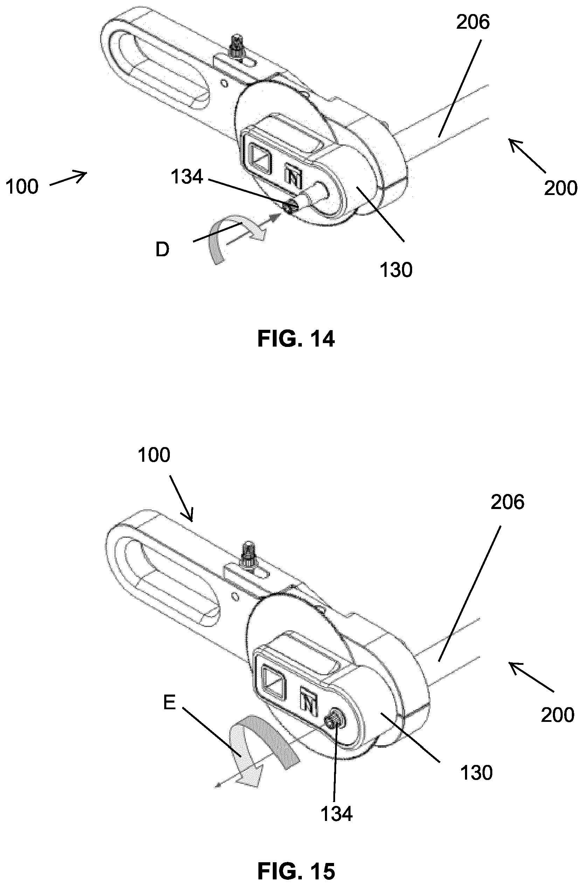

With reference to FIG. 14, the hub 130 is aligned with the second cut portion 206 such that the plug 134 can be unthreaded from the hub 130 and into the second cut portion 206 (see, also, FIG. 5). Specifically, the second threads 168 on the exterior of the outer portion 162 of the plug 134 (shown in FIGS. 17-18) can be disengaged from the plug chamber 154 of the hub 130 (shown in FIG. 5) by rotating the plug 134 in a direction of arrow D in FIG. 14. Such movement releases the plug 134 from the plug chamber 154 of the hub 130 and inserts the plug 134 into the second cut portion 206 of the utility service line 200.

With reference to FIG. 15, after the plug 134 is inserted into the second cut portion 206 of the utility service line 200, the plug 134 is tightened to seal against the inner sidewall 208 (shown in FIG. 5) of the second cut portion 206 by rotating the inner portion 156 of the plug 134 relative to the outer portion 162 in a direction of arrow E such that the seal 160 is compressed therebetween and expands in a radially outward direction to engage the inner sidewall 208 of the second cut portion 206 (see FIG. 5).

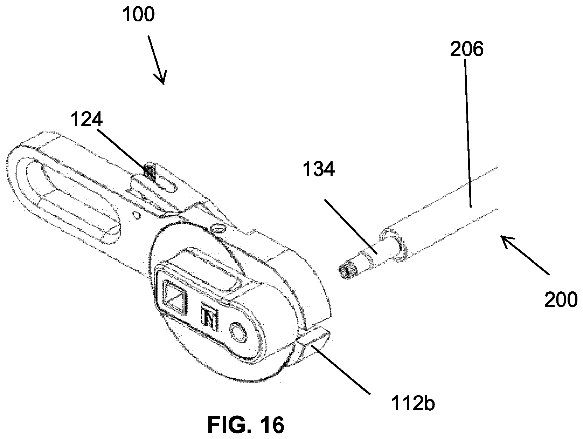

With reference to FIG. 16, the tool 100 can be disconnected from the second cut portion 206 by unthreading the nut 126 (shown in FIG. 8) from the threaded shaft 124 and releasing the second movable jaw 112b from the second cut portion 206 of the utility service line 200. In this manner, the open end of the second cut portion 206 remains plugged such that upstream water supply is uninterrupted.

Although embodiments or aspects have been described in detail for the purpose of illustration and description, it is to be understood that such detail is solely for that purpose and that embodiments or aspects are not limited to the disclosed embodiments or aspects, but, on the contrary, are intended to cover modifications and equivalent arrangements that are within the scope of the appended claims. For example. it is to be understood that the present disclosure contemplates that, to the extent possible, one or more features of any embodiment or aspect can be combined with one or more features of any other embodiment or aspect. In fact, many of these features can be combined in ways not specifically recited in the claims and/or disclosed in the specification.

## Claims

1. A service tool (100) for cutting and plugging a utility service line (200), the service tool (100) comprising:
a body (102) having a receiving portion (104) configured to receive the utility service line (200);
a clamping mechanism (110) movable relative to the body (102) and configured to clamp around at least a portion of an outer circumference of the utility service line (200) when the utility service line (200) is received in the receiving portion (104);
a cutting blade (128) disposed in the receiving portion (104) and configured to engage the outer circumference of the utility service line (200) and cut the utility service line (200) into a first cut portion (204) and a second cut portion (206) as the cutting blade is rotated about a cutting axis relative to the body; and
a hub (130) associated with the body (102), the hub (130) comprising a plugging mechanism (132) configured to displace the first cut portion (204) of the utility service line (200) and dispense a plug into the second cut portion (206) of the utility service line (200).

2. The service tool (100) according to claim 1, wherein the clamping mechanism (110) comprises at least one jaw (112) movable relative to the body (102) between an open position and a closed position.

3. The service tool (100) according to claim 2, wherein, in the closed position, the at least one jaw (112) is configured to clamp around at least the portion of the outer circumference of the utility service line (200).

4. The service tool (100) according to claim 2, wherein the clamping mechanism (110) comprises a threaded drive (124) for moving the at least one jaw (112) relative to the body (102) between the open position and the closed position.

5. The service tool (100) according to claim 1, further comprising a handle (103) connected to the body (102), wherein the handle (103) extends in a direction substantially perpendicular to a longitudinal axis (L) of the receiving portion (104).

6. The service tool (100) according to claim 1, wherein the hub (130) is connected to the body (102) via a rotatable shaft (136) such that the hub (130) is rotatable relative to the body (102) with rotation of the rotatable shaft (136).

7. The service tool (100) according to claim 6, wherein the rotatable shaft (136) comprises an input drive (140) configured for connecting to a tool (142) for rotating the rotatable shaft (136).

8. The service tool (100) according to claim 6, wherein the input drive (140) is a keyed hole (144) configured for receiving a corresponding protrusion (146) on the tool (142).

9. The service tool (100) according to claim 6, wherein the plugging mechanism (132) comprises a plug chamber (154) offset from the rotatable shaft (136), the plug chamber (154) configured to receive the plug (134).

10. The service tool (100) according to claim 9, wherein the hub (130) is configured to contact the utility service line (200) as the cutting blade (128) is rotated about the cutting axis (C) relative to the body (102) to displace the first cut portion (204) of the utility service line (200) such that the plug chamber (154) is aligned with the second cut portion (206) of the utility service line (200).

11. The service tool (100) according to claim 9, further comprising the plug (134) disposed in the plug chamber (154) of the plugging mechanism (132).

12. The service tool (100) according to claim 11, wherein the plug (134) is threadably received within the plug chamber (154).

13. The service tool (100) according to claim 11, wherein the plug (134) comprises an inner portion (156) having a plug end (158) with a seal (160) configured for engaging an inner sidewall (208) of the second cut portion (206) of the utility service line (200) and an outer portion (162) threadably connected to a shaft (164) of the inner portion (156) protruding from the plug end (158).

14. The service tool (100) according to claim 13, wherein the outer portion (162) has first threads (166) on an interior thereof configured for threadably connecting to the shaft (164) of the inner portion (156) and second threads (168) on an exterior thereof for threadably connecting to the plug chamber (154) of the plugging mechanism (132).

## Patentansprüche

1. Ein Servicewerkzeug (100) zum Durchtrennen und Verschliessen einer Versorgungsleitung (200), wobei das Servicewerkzeug (100) aufweist:
einen Körper (102) mit einem Aufnahmeabschnitt (104), welcher zur Aufnahme der Versorgungsleitung (200) ausgebildet ist;
einen Klemmmechanismus (110), welcher relativ zum Körper (102) beweglich ist und so ausgebildet ist, dass er sich um mindestens einen Abschnitt des Aussenumfangs der Versorgungsleitung (200) klemmt, wenn die Versorgungsleitung (200) im Aufnahmeabschnitt (104) aufgenommen ist;
eine Schneidklinge (128), welche im Aufnahmeabschnitt (104) angeordnet und so ausgebildet ist, dass sie in den Aussenumfang der Versorgungsleitung (200) eingreift und die Versorgungsleitung (200) in einen ersten Schnittabschnitt (204) und einen zweiten Schnittabschnitt (206) schneidet, während die Schneidklinge relativ zum Körper um eine Schneidachse gedreht wird; sowie
eine dem Körper (102) zugeordnete Nabe (130), wobei die Nabe (130) einen Verschlussmechanismus (132) aufweist, welcher so ausgebildet ist, dass er den ersten Schnittabschnitt (204) der Versorgungsleitung (200) verschiebt und einen Stopfen in den zweiten Schnittabschnitt (206) der Versorgungsleitung (200) einbringt.

2. Das Servicewerkzeug (100) gemäss Anspruch 1, wobei der Klemmmechanismus (110) mindestens eine Backe (112) aufweist, welche relativ zum Körper (102) zwischen einer offenen Position und einer geschlossenen Position bewegbar ist.

3. Das Servicewerkzeug (100) gemäss Anspruch 2, wobei in der geschlossenen Position die mindestens eine Backe (112) so ausgebildet ist, dass sie zumindest den Abschnitt des Aussenumfangs der Versorgungsleitung (200) umklammert.

4. Das Servicewerkzeug (100) gemäss Anspruch 2, wobei der Klemmmechanismus (110) einen Gewindeantrieb (124) zum Bewegen der mindestens einen Backe (112) relativ zum Körper (102) zwischen der offenen Position und der geschlossenen Position aufweist.

5. Das Servicewerkzeug (100) gemäss Anspruch 1, welches ausserdem einen mit dem Körper (102) verbundenen Griff (103) aufweist, wobei sich der Griff (103) in einer Richtung erstreckt, welche im Wesentlichen senkrecht zu einer Längsachse (L) des Aufnahmeabschnitts (104) verläuft.

6. Das Servicewerkzeug (100) gemäss Anspruch 1, wobei die Nabe (130) über eine drehbare Welle (136) mit dem Körper (102) verbunden ist, so dass die Nabe (130) bei Drehung der drehbaren Welle (136) relativ zum Körper (102) drehbar ist.

7. Das Servicewerkzeug (100) gemäss Anspruch 6, wobei die drehbare Welle (136) einen Antriebsanschluss (140) aufweist, welcher zum Verbinden mit einem Werkzeug (142) zum Drehen der drehbaren Welle (136) ausgebildet ist.

8. Das Servicewerkzeug (100) gemäss Anspruch 6, wobei es sich beim Antriebsanschluss (140) um eine profilierte Öffnung (144) handelt, welche zur Aufnahme eines entsprechenden Vorsprungs (146) am Werkzeug (142) ausgebildet ist.

9. Das Servicewerkzeug (100) gemäss Anspruch 6, wobei der Verschlussmechanismus (132) eine von der drehbaren Welle (136) versetzt angeordnete Stopfenkammer (154) aufweist, wobei die Stopfenkammer (154) zur Aufnahme des Stopfens (134) ausgebildet ist.

10. Das Servicewerkzeug (100) gemäss Anspruch 9, wobei die Nabe (130) so ausgebildet ist, dass sie die Versorgungsleitung (200) berührt, während die Schneidklinge (128) relativ zum Körper (102) um die Schneidachse (C) gedreht wird, um den ersten Schnittabschnitt (204) der Versorgungsleitung (200) derart zu verschieben, dass die Stopfenkammer (154) mit dem zweiten Schnittabschnitt (206) der Versorgungsleitung (200) ausgerichtet ist.

11. Das Servicewerkzeug (100) gemäss Anspruch 9, welches ausserdem den Stopfen (134) aufweist, welcher in der Stopfenkammer (154) des Verschlussmechanismus' (132) angeordnet ist.

12. Das Servicewerkzeug (100) gemäss Anspruch 11, wobei der Stopfen (134) in der Stopfenkammer (154) verschraubt aufgenommen ist.

13. Das Servicewerkzeug (100) gemäss Anspruch 11, wobei der Stopfen (134) einen inneren Abschnitt (156) mit einem Stopfenende (158) aufweist, welches eine Dichtung (160) umfasst, die dazu ausgebildet ist, mit einer inneren Seitenwand (208) des zweiten Schnittabschnitts (206) der Versorgungsleitung (200) in Eingriff zu gelangen, sowie einen äusseren Abschnitt (162), der mit einem Schaft (164) des Innenabschnitts (156), der aus dem Stopfenende (158) herausragt, verschraubt ist.

14. Das Servicewerkzeug (100) gemäss Anspruch 13, wobei der äussere Abschnitt (162) an seiner Innenseite erste Gewinde (166) aufweist, um eine Schraubverbindung mit dem Schaft (164) des inneren Abschnitts (156) herzustellen, und an seiner Aussenseite zweite Gewinde (168) aufweist, um eine Schraubverbindung mit der Stopfenkammer (154) des Verschlussmechanismus (132) herzustellen.

## Revendications

1. Un outil d'entretien (100) destiné à couper et à obturer une conduite d'approvisionnement (200), l'outil d'entretien (100) comprenant :
un corps (102) comportant une partie de réception (104) configurée pour recevoir la conduite d'approvisionnement (200) ;
un mécanisme de serrage (110) mobile par rapport au corps (102) et configuré pour serrer au moins une partie de la circonférence extérieure de la conduite d'approvisionnement (200) lorsque celle-ci est reçue dans la partie de réception (104) ;
une lame de coupe (128) disposée dans la partie de réception (104) et configurée pour venir en prise avec la circonférence extérieure de la conduite d'approvisionnement (200) et pour couper la conduite d'approvisionnement (200) en une première partie coupée (204) et une deuxième partie coupée (206) lorsque la lame de coupe est mise en rotation autour d'un axe de coupe par rapport au corps ; et
un moyeu (130) associé au corps (102), le moyeu (130) comprenant un mécanisme d'obturation (132) configuré pour déplacer la première partie coupée (204) de la conduite d'approvisionnement (200) et à introduire un bouchon dans la deuxième partie coupée (206) de la conduite d'approvisionnement (200).

2. L'outil d'entretien (100) selon la revendication 1, dans lequel le mécanisme de serrage (110) comprend au moins une mâchoire (112) mobile par rapport au corps (102) entre une position ouverte et une position fermée.

3. L'outil d'entretien (100) selon la revendication 2, dans lequel, en position fermée, l'au moins une mâchoire (112) est configurée pour serrer autour au moins de la partie de la circonférence extérieure de la conduite d'approvisionnement (200).

4. L'outil d'entretien (100) selon la revendication 2, dans lequel le mécanisme de serrage (110) comprend un entraînement fileté (124) destiné à déplacer l'au moins une mâchoire (112) par rapport au corps (102) entre la position ouverte et la position fermée.

5. L'outil d'entretien (100) selon la revendication 1, comprenant en outre une poignée (103) reliée au corps (102), la poignée (103) s'étendant dans une direction sensiblement perpendiculaire à un axe longitudinal (L) de la partie de réception (104).

6. L'outil d'entretien (100) selon la revendication 1, dans lequel le moyeu (130) est relié au corps (102) par l'intermédiaire d'un arbre rotatif (136) de telle sorte que le moyeu (130) puisse tourner par rapport au corps (102) lors de la rotation de l'arbre rotatif (136).

7. L'outil d'entretien (100) selon la revendication 6, dans lequel l'arbre rotatif (136) comprend un entraînement d'entrée (140) configuré pour être relié à un outil (142) destiné à faire tourner l'arbre rotatif (136).

8. L'outil d'entretien (100) selon la revendication 6, dans lequel l'entraînement d'entrée (140) est un alésage cannelé (144) configuré pour recevoir une protrusion correspondante (146) sur l'outil (142).

9. L'outil d'entretien (100) selon la revendication 6, dans lequel le mécanisme d'obturation (132) comprend une chambre d'obturation (154) décalée par rapport à l'arbre rotatif (136), la chambre d'obturation (154) étant configurée pour recevoir le bouchon (134).

10. L'outil d'entretien (100) selon la revendication 9, dans lequel le moyeu (130) est configuré pour entrer en contact avec la conduite d'approvisionnement (200) lorsque la lame de coupe (128) est mise en rotation autour de l'axe de coupe (C) par rapport au corps (102) afin de déplacer la première partie coupée (204) de la conduite d'approvisionnement (200) de telle sorte que la chambre d'obturation (154) soit alignée avec la deuxième partie coupée (206) de la conduite d'approvisionnement (200).

11. L'outil d'entretien (100) selon la revendication 9, comprenant en outre le bouchon (134) disposé dans la chambre d'obturation (154) du mécanisme d'obturation (132).

12. L'outil d'entretien (100) selon la revendication 11, dans lequel le bouchon (134) est reçu par vissage à l'intérieur de la chambre d'obturation (154).

13. L'outil d'entretien (100) selon la revendication 11, dans lequel le bouchon (134) comprend une partie intérieure (156) présentant une extrémité de bouchon (158) munie d'un joint d'étanchéité (160) configuré pour venir en prise avec une paroi latérale intérieure (208) de la deuxième partie coupée (206) de la conduite d'approvisionnement (200) et une partie extérieure (162) reliée par vissage à un arbre (164) de la partie intérieure (156) faisant saillie depuis l'extrémité de bouchon (158).

14. L'outil de d'entretien (100) selon la revendication 13, dans lequel la partie extérieure (162) comporte un premier filetage (166) sur sa face intérieure, conçu pour se raccorder par vissage à l'arbre (164) de la partie intérieure (156), et un second filetage (168) sur sa face extérieure, conçu pour se raccorder par vissage à la chambre d'obturation (154) du mécanisme d'obturation (132).
